# EUROPÄISCHE PATENTSCHRIFT

(11) **EP 3 218 231 B1**
(45) Veröffentlichungstag und Bekanntmachung des Hinweises auf die Patenterteilung: **22.08.2018**
(21) Anmeldenummer: 15790900.3
(22) Anmeldetag: 02.11.2015
(51) Int. Cl.: B60R 21/00

(54) **DRUCK- BZW. SCHALTZUSTANDSANZEIGE**
PRESSURE OR SWITCHING STATE DISPLAY
INDICATEUR DE L'ÉTAT DE PRESSION OU DE COMMUTATION

(30) Priorität: 13.11.2014 DE 102014223179; 11.03.2015 DE 102015204408
(43) Veröffentlichungstag der Anmeldung: 20.09.2017
(73) Patentinhaber: Bayerische Motoren Werke Aktiengesellschaft, 80809 München (DE)
(72) Erfinder: KUNBERGER, Jan-Mark, 81241 München (DE)
(86) Internationale Anmeldenummer: PCT/EP2015/075424
(87) Internationale Veröffentlichungsnummer: WO 2016/074962

(56) Entgegenhaltungen:
- JP-A- 2004 169 714
- JP-A- 2008 240 844
- US-A- 3 235 726
- US-A1- 2007 251 688

## Beschreibung

Die hier offenbarte Technologie betrifft eine Druck- bzw. Schaltzustandsanzeige.

Druckbehälter bzw. Drucktanks sind aus dem Stand der Technik bekannt. Ein Druckbehälter ist beispielsweise ein Hochdruckgasbehälter oder ein Kryodrucktank. Komposit-Druckbehälter werden allgemein auch Verbundwerkstoffbehälter oder Faserverbundbehälter genannt. Druckbehälter der Typen II, III und IV umfassen ganz oder teilweise faserverstärkte Materialschichten, die einen (Innen)Liner umgeben. Als faserverstärkte Kunststoffe (FVK) kommen bspw. kohlenstofffaserverstärkte Kunststoffe (CFK) und glasfaserverstärkte Kunststoffe (GFK) zum Einsatz. Der Liner ist bei Typ II und Typ III Behältern aus Metall (in der Regel Aluminium oder Stahl) gebildet. Druckbehälter beherbergen komprimierte Fluide, wie bspw. Druckluft, Sauerstoff, Methan, Wasserstoff, Kohlendioxid, etc. Auch Kunststoffliner (Vollcomposite-Behälter, Typ IV Behälter) sind bekannt. Hochdruckgasbehälter werden beispielsweise in Fahrzeugen eingesetzt, die mit komprimiertem Erdgas, oft als compressed natural gas (CNG) bezeichnet, oder mit Wasserstoff betrieben werden.

In Hochdruckgasbehälter werden komprimierten Fluide unter einem Druck von mehreren hundert Bar gespeichert. Gemäß der Verordnung (EU) Nr. 406/2010 der Kommission vom 26. April 2010 zur Durchführung der Verordnung (EG) Nr. 79/2009 des Europäischen Parlaments und des Rates über die Typgenehmigung von wasserstoffbetriebenen Kraftfahrzeugen (nachstehend: EC79) muss der Berstdruck eines Typ III oder Typ IV Wasserstoff-Hochdruckbehälters über dem 2,25-fachen seines maximalen Betriebsdruckes liegen. Ein 700 bar Hochdruckgasbehälter muss daher so ausgelegt sein, dass er einem Druck von 1575 bar standhält.

Bei Druckbehältern besteht bei Einwirken eines thermischen Ereignisses (z.B. ein Fahrzeugbrand) auf den Druckbehälter die Gefahr des Berstens. Die Vorschriften (z.B. EC79 oder GTR (Global Technical Regulation ECE/TRANS/WP.29/2013/41)) fordern daher die Installation von mindestens einem thermischen Druckentlastungsventil (auch Thermal Pressure Release Device oder TPRD genannt) pro Druckbehälter. Die Druckentlastungsventile reduzieren bei einem thermischen Ereignis den Druck im Druckbehälter noch vor Eintreten einer thermischen Behälterwandschädigung durch Abblasen des Druckbehältergases. Ein Bersten des Druckbehälters kann so sicher verhindert werden.
Für Rettungskräfte, die an einem Unfallort eintreffen, ist die Kenntnis über den Druckzustand eines Druckbehälters von entscheidender Bedeutung. Brennt ein Fahrzeug und die Druckentlastung hat bereits stattgefunden, können sich die Rettungskräfte zum Bergen oder Löschen dem Fahrzeug annähern. Hat jedoch noch keine Druckentlastung über das TPRD stattgefunden, gehen die Rettungskräfte ein erhöhtes Risiko bei der Annäherung an das Fahrzeug ein. Ein Berstereignis könnte zu schweren Verletzungen führen. Aktuelle Druckbehältertechnologien stellen Rettungskräften keine gesicherten Informationen über den Druckzustand eines Druckbehälters zur Verfügung.
Überdies sind in Kraftfahrzeugen mit elektrischen Traktionsmotoren zur Hochvoltabsicherung Sicherungsschaltungen vorgesehen, die u.a. Sicherheitsrelais bzw. -schütze aufweisen. Wurde das Fahrzeug beschädigt, müssen die Rettungskräfte evtl. in Erfahrung bringen, ob die Sicherheitsrelais bzw. -schütze ausgelöst haben. Ansonsten kann ein beachtliches gesundheitliches Risiko bei der Bergung bestehen.
Die Druckschriften US 2007/251688 A1, US 3 235 726 A und
JP 2004 169714 A zeigen vorbekannten Stand der Technik, wobei die US2007/0251688 A1 dem Oberbegriff des Anspruchs 1 entspricht. Es ist eine Aufgabe der hier offenbarten Technologie, die aus dem Stand der Technik resultierenden Nachteile zu verringern oder zu beheben. Die Aufgabe wird gelöst durch den Gegenstand der unabhängigen Patentansprüche. Die abhängigen Patentansprüche stellen bevorzugte Ausgestaltungen dar. Weitere Aufgaben ergeben sich aus den Vorteilen der hier offenbarten Technologie.
Die hier offenbarte Technologie betrifft eine Druck- und/oder Schaltzustandsanzeige (nachstehend wird vereinfachend der Begriff "Anzeige" verwendet), die, als Druckentlastungsventil für einen Druckbehälter ausgebildet ist. Ein Druckbehälter kann beispielsweise ein Hochdruckgasbehälter oder ein Kryodrucktank sein, wie er im einleitenden Teil beschrieben wurde. Die Anzeige kann direkt am Hochdruckbehälter angeordnet sein. Ferner kann die Anzeige beabstandet ausgebildet sein. Erfindungsgemäß ist die Anzeige in ein Druckentlastungsventil mit integriert. Die Druckentlastungsventile sind in der Regel an einem Ende des Druckbehälters angeordnet. Bei langen Druckbehältern können sie in einem Abstand von ca. 1 m entlang der Längsrichtung des Druckbehälters vorgesehen sein.

Die Anzeige umfasst eine Strahlenquelle, die geeignet ist, insbesondere kontinuierlich Strahlung zu emittieren. Beispielsweise kann es sich um ein kontinuierlich Strahlung freisetzendes Material handeln. Bevorzugt handelt es sich um eine autarke Strahlenquelle, die ohne eine zusätzliche Energiequelle, und ferner bevorzugt ohne weitere Bauteile, Strahlung freisetzen kann. Eine autarke Strahlenquelle hat den Vorteil, dass sie die Strahlung auch nach einer schweren Beschädigung des Kraftfahrzeuges noch emittiert. Vorteilhaft beeinflussen auch hohe Temperaturen während eines Fahrzeugbrands nicht die Strahlenquelle. Es handelt sich also bevorzugt um eine feuerfeste Strahlenquelle.

Die Anzeige umfasst ferner einen Strahlenschutz. Der Strahlenschutz ist derart ausgebildet, dass er in einem ersten Zustand der Anzeige die Strahlenquelle abschirmen kann. Bevorzugt gelangt dann keine oder nur vernachlässigbar wenig Strahlung in die Umgebung des Fahrzeuges. Bevorzugt ist der Strahlenschutz derart gestaltet, dass die Umgebung bzw. Umwelt keiner messbaren Strahlung ausgesetzt ist. Je nach Strahlenquelle können dabei unterschiedliche Materialien und unterschiedliche Wandstärken zur Ausbildung des Strahlenschutzes eingesetzt werden.

Beispielsweise kann als Strahlenquelle ein leicht radioaktiver Strahler eingesetzt werden. Der Strahlenschutz könnte dann beispielsweise Bleiplatten umfassen, die das strahlende Material im ersten Zustand umgeben.

Die Anzeige umfasst ferner einen Aktuator, der geeignet ist, die Anzeige von dem ersten Zustand in einen zweiten Zustand zu überführen. Insbesondere ist der Aktuator in der Lage, die Anzeige von dem ersten Zustand in den zweiten Zustand zu überführen, bevorzugt wenn der Druck in dem Druckbehälter auf einen Wert unterhalb eines Grenzdrucks P_{BHGmin} abfällt und/oder ein thermisches Ereignis vorliegt, beispielsweise wenn eine Grenz- bzw. Auslösetemperatur der Anzeige von ca. 50°C bis ca. 400°C, ferner bevorzugt von ca. 75°C bis ca. 300°C und besonders bevorzugt von ca. 85°C bis ca. 200°C an der Anzeige überschritten wird.

Der Strahlenschutz ist bevorzugt derart ausgebildet, dass er in dem ersten Zustand die emittierte Strahlung abschirmt. Ferner ist die Anzeige derart ausgebildet, dass in einem zweiten Zustand zumindest ein Teil der emittierten Strahlung nicht abgeschirmt wird. Mit anderen Worten wird im zweiten Zustand eine im Vergleich zum abschirmenden ersten Zustand um ein Vielfaches höhere Strahlung (ggf. in einem eingeschränkten Spektrum) die Anzeige verlassen. Im zweiten Zustand kann also mehr Strahlung in die Umgebung gelangen als im ersten Zustand.
Im zweiten Zustand ist die Strahlenintensität insbesondere derart, dass die emittierte Strahlung durch eine Detektionseinrichtung detektiert werden kann. Rettungskräfte können dann bevorzugt die emittierte Strahlung im zweiten Zustand der Anzeige mit einer einfachen Detektionseinrichtung messen und lokalisieren. Somit ist für die Rettungskräfte leicht feststellbar, ob der Drucktank drucklos ist oder nicht. Gleichfalls können Rettungskräfte leicht den Schaltzustand von sicherheitsrelevanten Ventilen, Schaltern und/oder Schützen ermitteln.
Darüber hinaus können die Rettungskräfte die Position(en) der Anzeige(n) lokalisieren und bei Verwendung von mehreren Anzeigen bzw. Drucktanks die ausgelösten Anzeigen mit der Anzahl der im Fahrzeug verbauten Anzeigen/Drucktanks abgleichen. Die hier offenbarte Technologie verwendet bevorzugt eine Strahlenquelle, die sehr robust ist und unabhängig vom Zustand des Kraftfahrzeuges zuverlässig Strahlung emittiert. Den Rettungskräften wird somit sehr sicher der aktuelle Druck- bzw. Schaltzustand angezeigt. Das Risiko, welches die Rettungskräfte bei der Bergung eingehen, ist somit kalkulierbar. Die Anzeige arbeitet überdies autark und steht in jeder Unfallsituation zur Verfügung.

Vorteilhaft ist die Strahlungsintensität der Strahlenquelle im zweiten Zustand so bemessen, dass die Strahlung durch eine Detektionseinrichtung in einer sicheren Entfernung, beispielsweise von ca. 30 m bis ca. 2 km, ferner bevorzugt von ca. 50 m bis ca. 1 km, und besonders bevorzugt von ca. 100 m bis ca. 200 m, verlässlich detektiert werden kann. Vorteilhaft kann die Strahlung somit unabhängig vom Zustand des Fahrzeugs aus sicherer Entfernung detektiert werden.

Kommen die Druckbehälter in einem Kraftfahrzeug zum Einsatz, so speichern die hier offenbarten Druckbehälter in der Regel oxidierenden Treibstoff. Die Drucktanks werden daher in der Praxis nie vollständig leergefahren, da ansonsten die Gefahr besteht, dass Sauerstoff in den Druckbehälter eintritt. Es könnte sich dann ein explosionsfähiges Gemisch im Tank bilden. Ein betriebsbedingt leerer Tank hat also immer noch einen nennenswerten Mindestbehälterdruck P_{BHmin}. Derzeit sind beispielsweise Druckbehälter bekannt, die einen Service-Mindestbehälterdruck P_{BHmin} von 3 bara aufweisen (d.h. von 2 barü zur Atmosphäre). Im betriebsbedingten Leerzustand wird derzeit in der Regel ein Mindestdruck von ca. 20 barü vorgegeben. Darüber hinaus gibt es auch Herstelleranforderungen bei Typ IV Druckbehältern dahingehend, dass eine komplette Entleerung verhindert oder zumindest weitgehend vermieden werden sollte, um die Druckbehälterstruktur nicht zu beschädigen. Ein leerer Druckbehälter sollte daher immer mit einem Inertgas unter Druck gelagert werden. Es ist also zwischen einem betriebsbedingt leeren Druckbehälter mit einem Druck gleich bzw. oberhalb des Mindestbehälterdruckes P_{BHmin} und einem völlig druckentlasteten Druckbehälter (d.h. Druckbehälter bei Umgebungsdruck von ca. 1 bara) zu unterscheiden.

Sind mehrere Anzeigen/Drucktanks in einem Fahrzeug verbaut, so addiert sich vorteilhaft die Strahlungsintensität der einzelnen Strahlenquellen der jeweiligen Anzeigen und die Rettungskräfte können anhand der Intensität erkennen, ob alle Anzeigen/Drucktanks bereits ausgelöst haben/drucklos sind. Bei einem festen Strahler (im Vergleich zu einem flüssigen Strahler) kann das Strahlungsmaximum eindeutig bestimmt werden. D.h. der feste Strahler kann eindeutig im Raum lokalisiert werden. Sind mehrere Drucktanks in einem Fahrzeug verbaut kann auf diese Weise die Anzahl der ausgelösten Anzeigen bestimmt werden und mit der Anzahl der im Fahrzeug verbauten Drucktanks verglichen werden.

Die hier offenbarte Technologie umfasst ferner ein Verfahren zur Anzeige eines Druckzustandes von einem Druckbehälter, umfassend die Schritte:
- Bereitstellen der hier gezeigten Druckzustandsanzeige, und
- Überführen der Druckzustandsanzeige von einem ersten Zustand in einen zweiten Zustand, wenn der Druck in dem Druckbehälter auf einen Wert unterhalb eines Grenzdrucks P_{BHGmin} abfällt, so dass im zweiten Zustand zumindest ein Teil der emittierten Strahlung nicht abgeschirmt wird.

Die hier offenbarte Technologie stellt Rettungskräften eine einfache und zuverlässige Funktion zur Verfügung, welche sicher den Entlastungszustand eines Drucktanks oder einer unter Druck stehenden Leitung anzeigt.

Der Aktuator ermöglicht bevorzugt eine Relativbewegung zwischen der Strahlenquelle und dem Strahlenschutz und/oder zwischen Teilen des Strahlenschutzes. Die Anzeige kann bevorzugt durch die Relativbewegung von dem ersten Zustand in den zweiten Zustand überführt werden.

Die Relativbewegung kann dabei eine translatorische Bewegung sein, beispielsweise eine Verschiebung von Strahlenquelle und Strahlenschutz oder eine Verschiebung eines Deckels einer Strahlenschutzbox. Alternativ oder zusätzlich kann die Relativbewegung eine rotatorische Bewegung sein, beispielsweise eine Verdrehung von mindestens zwei Hälften eines kreisrunden Strahlenschutzes.

Im ersten Zustand kann die Strahlenquelle vom Strahlenschutz umschlossen sein. Im zweiten Zustand kann zumindest ein Teil der Strahlenquelle freiliegen. Freiliegen bedeuten in diesem Zusammenhang, dass zumindest ein Teil der Strahlenquelle nicht von abschirmendem Material bedeckt ist. Es können jedoch selbstverständlich nicht abschirmende Materialien den freiliegenden Teil vor Witterungseinflüsse, etc. schützen.

Bevorzugt ist der Aktuator ein rein mechanisch operierender Aktuator, der bevorzugt mindestens ein Federmittel und mindestens ein pneumatisches Mittel aufweist, um die Relativbewegung zu erzeugen. Mit anderen Worten umfasst der Aktuator keine elektrischen oder elektronischen Bauteile.

Der Aktuator kann eine Feder und einen Kolben umfassen. Der Kolben kann insbesondere derart ausgestaltet sein, dass er die Relativbewegung erzeugt, wenn der Druck in dem Druckbehälter auf einen Wert unterhalb eines Grenzdrucks P_{BHGmin} abfällt.

Beispielsweise kann der Kolben in einem Zylinder angeordnet sein. In dem Zylinder kann der Kolben beispielsweise sich von einer ersten Position in eine zweite Position bewegen. Wenn der Kolben sich beispielsweise in der ersten Position verweilt, kann sich die Anzeige im ersten Zustand befinden. In der zweiten Kolbenposition kann die Anzeige beispielsweise den zweiten Zustand annehmen.

Auf den Kolben kann eine pneumatische Druckkraft F_{G} einwirken, die indikativ für den Druck in dem Druckbehälter oder für einen Schaltzustand einer Sicherheitskomponente sein kann.

Beispielsweise kann die Druckkraft proportional zum Druck in dem Druckbehälter sein. Insbesondere kann die Anzeige, insbesondere die Feder und der Kolben, derart ausgestaltet sein, dass die Federkraft, bevorzugt zusammen mit einer weiter unten erläuterten Umgebungsdruckkraft, größer ist als die pneumatische Druckkraft F_{G}, wenn der Druck in dem Druckbehälter auf einen Wert unterhalb eines Grenzdrucks P_{BHGmin} abfällt. Die Federkraft, gegebenenfalls die unten angeführte Umgebungsdruckkraft, und die Druckkraft F_{G} wirken auf den Kolben. Jedoch wirken die Kräfte in entgegengesetzter Richtung. Ist die pneumatische Druckkraft größer als die Federkraft plus pneumatische Druckkraft der Umgebung, stellt sich der erste Zustand ein.

Der Kolben kann auch durch eine Kapsel in der ersten Position bzw. im ersten Zustand gehalten sein. Insbesondere kann die Kapsel derart im Zylinder positioniert und derart ausgestaltet sein, dass sie den Kolben im ersten Zustand hält, solange der Druck in dem Druckbehälter nicht auf einen Wert unterhalb eines Grenzdrucks abfällt.

Wird als Strahlenquelle ein, insbesondere leicht, radioaktiver Strahler (bevorzugt Beta- oder Gammastrahler) eingesetzt, so lässt sich die im zweiten Zustand emittierte Strahlung anhand des Spektrums, besonders des Gammaspektrums oder der Strahlungsdosis mit herkömmlichen Detektionseinrichtungen (z.B. eine Ionisationskammer, Proportionalzählrohr, oder Geiger-Müller-Zählrohr) detektieren. Solche Detektionseinrichtungen sind vergleichsweise preiswert und gehören bereits heute zur Ausrüstung vieler Rettungskräfte. Ein radioaktiver Strahler mit einer hohen Halbwertszeit liefert eine unbegrenzte Energiequelle. D.h. die Detektionsfunktion steht zeitunabhängig zur Verfügung. Bevorzugt wäre ein Betastrahler, besonders bevorzugt ein Gammastrahler. Ein Gammastrahler ist sehr energiereich. Fahrzeugteile schirmen diesen Strahler daher nicht einfach ab. Beispielsweise kann der Strahler das Nuklid Cobalt 60 umfassen. Dabei können auch bevorzugt einzelne Nuklide direkt an ihrem Energiespektrum erkannt werden. Die Nuklide haben sozusagen einen "Fingerabdruck". Die Identifizierung wäre anhand des Gammastrahlenspektrums absolut eindeutig möglich. Bevorzugt kann anhand der Codierung also noch eine weitere Information, beispielsweise über das Fahrzeug bzw. den Tank, übermittelt werden.
Die hier offenbarte Technologie betrifft ferner einen Druckbehälter mit der hier gezeigten Anzeige. Die hier gezeigte Anzeige ist bevorzugt pneumatisch mit dem Innenraum des Druckbehälters verbunden bzw. verbindbar. Ferner kann die hier gezeigte Anzeige im Druckbehälter angeordnet sein.

Die hier offenbarte Technologie betrifft ferner ein Kraftfahrzeug mit mindestens einem hier offenbarten Druckbehälter.

Der Aktuator kann einen Kolben umfassen, und wobei im bzw. am Kolben die Strahlenquelle angeordnet ist. Im Kolben kann ferner mindestens ein Kolben-Strahlenschutz angeordnet sein. Ein Gehäuse-Strahlenschutz kann im bzw. benachbart zum Gehäuse der Anzeige vorgesehen sein. Der Gehäuse-Strahlenschutz und der Kolben-Strahlenschutz können bevorzugt zumindest einen Teil der emittierten Strahlung abschirmen. Auf den Kolben kann eine pneumatische Druckkraft F_{G} einwirken, die indikativ für den Druck in dem Druckbehälter sein kann. Der Kolben kann durch eine Kapsel im ersten Zustand gehalten sein. Die Anzeige ist als Druckentlastungsventil ausgebildet sein. Der Strahlenschutz kann der Aktuator und/oder ein zusätzlicher (Schmelz)Aktuator sein. Der Strahlenschutz kann aus einem Material hergestellt und in der Anzeige derart angeordnet sein, dass bei einem thermischen Ereignis der Strahlenschutz schmilzt. Der schmelzbare Strahlenschutz sowie die Strahlenquelle können Bestandteil einer Kapsel sein, insbesondere einer Kapsel eines Druckentlastungsventils. Der schmelzbare Strahlenschutz sowie die Strahlenquelle kann/können beispielsweise ein Material aufweisen, das bei einer Temperatur oberhalb der Grenztemperatur schmilzt. Der Körper kann beispielsweise aus Blei oder einer Bleilegierung hergestellt sein.
Die hier offenbarte Technologie wird nun anhand von Figuren näher erläutert. Es zeigen:
- Fig. 1: eine Druckzustandsanzeige 100 im ersten Zustand, die der Erfindung nicht entspricht,
- Fig. 2: eine Druckzustandsanzeige 100 im zweiten Zustand, die der Erfindung nicht entspricht,
- Fig. 3: eine Druckzustandsanzeige 100 im ersten Zustand, die der Erfindung nicht entspricht,
- Fig. 4: eine Anzeige 100 im ersten Zustand,
- Fig. 5: eine Anzeige 100 im zweiten Zustand, und
- Fig. 6: eine Anzeige 100 im ersten Zustand.

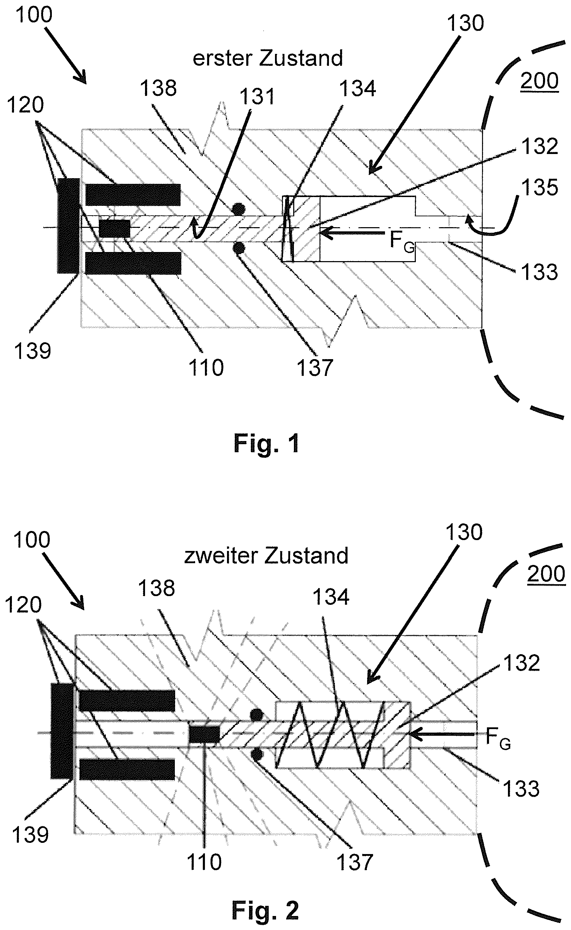

Die in Fig. 1 gezeigte Anzeige 100 ist eine Druckzustandsanzeige 100 und umfasst eine Strahlenquelle 110, die hier in einem Strahlenschutz 120 aufgenommen ist. Der Strahlenschutz 120 umfasst hier einen Bleimantel aus Bleiplatten 120, die die von der Strahlenquelle 110 fortwährend emittierte Strahlung absorbieren. Aufgrund dieser Abschirmung dringt keine Strahlung aus dem Strahlenschutz 120 heraus. Die Strahlenquelle 110 ist an einer Kolbenstange des Kolbens 132 befestigt. Der Kolben 132 ist in einem Kolbenschacht 131 des Gehäuses 138 geführt. Das Gehäuse 138 umfasst ferner einen Fluidkanal 135, der den Kolben 132 zumindest indirekt mit dem Inneren des Druckbehälters verbindet. Beispielsweise kann die Druckzustandsanzeige 100 über ein On-Tank-Valve mit dem Druckbehälter 200 verbunden sein (in den Figuren 1 und 2 ist schematisch lediglich ein Druckbehälter 200 mit gestrichelter Linie gezeigt). Eine Seite des Kolbens 132 wird durch die Feder 134 mit einer Federkraft beaufschlagt. Auf die gegenüberliegende Seite des Kolbens wirkt die pneumatische Druckkraft F_{G} ein. Die pneumatische Druckkraft F_{G} wird hier durch den Tankinnendruck des Druckbehälters 200 unmittelbar beeinflusst. Die beiden Kräfte wirken in entgegengesetzte Richtungen. Überdies greift an der Stirnfläche der Kolbenstange noch eine Umgebungsdruckkraft an, die in die gleiche Richtung wie die Federkraft wirkt.
Solange der Druck in dem Druckbehälter 200 nicht auf einen Wert unterhalb eines Grenzdrucks P_{BHGmin} abfällt ist die aus der Federkraft und der Umgebungsdruckkraft resultierende Kraft kleiner als die pneumatische Druckkraft F_{G}. Folglich verweilt der Kolben 132 in seiner Endlage (erste Position) und die Strahlenquelle 110 verweilt im Strahlenschutz 120. Es kann also keine Strahlung in die Umgebung gelangen.

Im Kolbenschacht 131 kann eine Dichtung 137 angeordnet sein, die die Kolbenstange gegenüber der Umgebung abdichtet. Der Kolbenschacht 131 kann in einen Druckausgleichsspalt 139 münden. Bevorzugt ist im Fluidkanal 135 ein Druckminderer 133, beispielsweise eine Drossel 133, angeordnet. Zur Bewegung des Kolbens 132 ist bevorzugt kein großer Massenstrom erforderlich. Um eine Leckage bei Versagen der Dichtung 137 auf ein unkritisches Minimum zu reduzieren, befindet sich auf der Hochdruckseite zwischen Druckbehälter 200 und Kolben 132 die Drossel 133. Alternativ kann auch eine gasdurchlässige Membran 133 vorgesehen sein. Der Massenstrom durch die Drossel/Membran 133 kann dabei so eingestellt sein, dass dieser selbst ohne Dichtung die gesetzlichen Anforderungen (z.B. nach EC79 oder GTR) von derzeit 10 Ncm³ Wasserstoff pro Stunde erfüllt.

In Fig. 2 ist die Druckzustandsanzeige 100 im zweiten Zustand (zweite Position) gezeigt. Wenn der Druckbehälterinnendruck auf Umgebungsdruck sinkt, z.B. durch eine Druckentlastung über das TPRD, liegt ein Druckwert unterhalb des Grenzdrucks P_{BHGmin} vor. Gleichsam sinkt dann auch die pneumatische Druckkraft F_{G} auf einen geringen Wert. Die pneumatische Druckkraft F_{G} ist dann geringer als die aus der Federkraft und der Umgebungsdruckkraft resultierende Kraft. Folglich drückt die Feder 134 den Kolben 132 aus seiner Endlage bzw. der ersten Position (vgl. Fig. 1) heraus. Gleichzeitig wird die an der Kolbenstange angebrachte Strahlenquelle 110 aus dem Strahlenschutz heraus befördert. Die Druckzustandsanzeige 100 gelangt in den zweiten Zustand. In diesem zweiten Zustand der Druckzustandsanzeige 100 tritt die von der Strahlenquelle 110 emittierte Strahlung hier nahezu ungehindert aus. Offensichtlich wird hier zumindest ein Teil der emittierten Strahlung in diesem zweiten Zustand nicht abgeschirmt. Mit geeigneten Messgeräten kann diese Strahlung zuverlässig aus sicherer Entfernung vom Rettungspersonal erfasst werden.

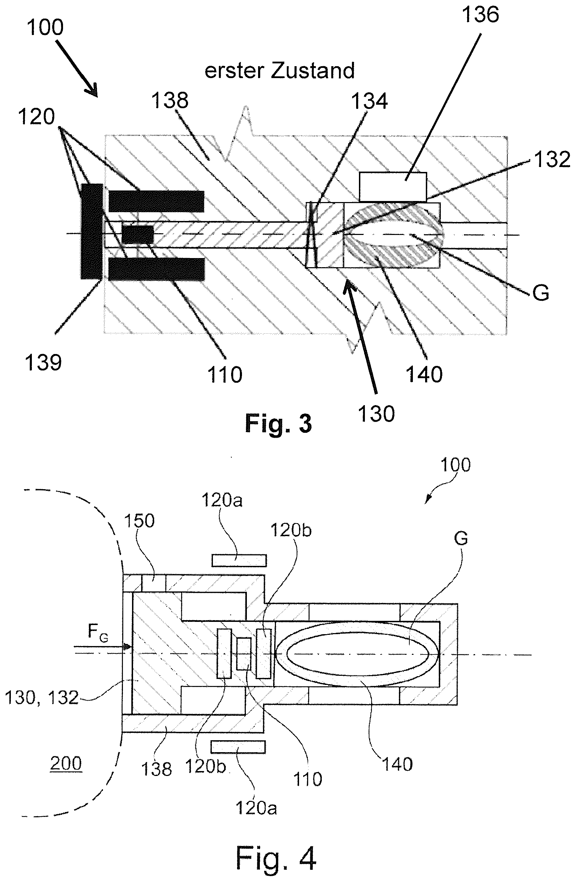

Fig. 3 zeigt eine weitere Ausgestaltung einer Druckzustandsanzeige 100. Die Auslösung erfolgt hier durch die Zerstörung einer Kapsel 140, beispielsweise einer Glaskapsel 140. Die Druckzustandsanzeige 100 ist hier im Inneren des Druckbehälters 200 angeordnet. Die Glaskapsel 140 verhindert das Auslösen indem sie die Reaktionskraft gegen die Feder 134 (im zusammengedrückten Zustand) stellt. In der Glaskapsel 140 ist ein Gas G eingeschlossen. Der Kapselinnendruck P_{IK} liegt also über dem Umgebungsdruck, jedoch unter dem Leerdruck bzw. Mindestbehälterdruck P_{BHmin} des Drucktanks.

Fällt der Innendruck im Druckbehälter 200 auf Umgebungsdruck ab, z. B. auf ca. 1 bar durch Druckentlastung über das TPRD, dann zerstört das in der Glaskapsel 140 eingeschlossene Gas G durch seinen vergleichsweise hohen Kapselinnendruck P_{IK} die Glaskapsel 140. Die Glassplitter können dabei in den mindestens einen Hohlraum 136 entweichen. Durch die Zerstörung der Glaskapsel 140 entfällt die Reaktionskraft der Feder 134, welche den Kolben 132 im ersten Zustand bzw. ersten Position hält. Die Feder 134 drückt nun den Kolben 132 in den zweiten Zustand. Die Strahlenquelle 110 verlässt den Strahlenschutz 120 und die Strahlung kann von außen detektiert werden. Vorteilhaft wird hier keine Verbindung zur Umgebung benötigt. Die Dichtung 137 im Kolbenschacht 131 bzw. zwischen Hochdruckseite und Umgebung kann entfallen. Es existiert kein Leckagerisiko. Bevorzugt ist die Druckzustandsanzeige 100 auf der Innenseite des On-Tank-Valves derart angebracht, dass sie in das Innere des Druckbehälters hinein ragt.

Fig. 4 zeigt eine erfindungsgemässe Anzeige im ersten Zustand. Der Strahlenschutz 120 umfasst hier einen Kolben-Strahlenschutz 120b und einen Gehäuse-Strahlenschutz 120a. Beispielsweise können mehrere Strahlenschutzplatten und/oder Strahlenschutzringe 120a, 120b vorgesehen sein. Der Gehäuse-Strahlenschutz 120a ist hier benachbart zum Gehäuse 138 vorgesehen. Dieser Gehäuse-Strahlenschutz 120a kann in einem gewissen Abstand oder unmittelbar am Gehäuse 138 anliegend ausgebildet sein. Ferner kann er auch im Gehäuse 138 mit integriert sein.
Der Gehäuse-Strahlenschutz 120a kann zumindest einen Teil der emittierten Strahlung abschirmen. Ferner ist hier der Kolben-Strahlenschutz 120b in den Kolben 132 integriert. Er kann ebenfalls Strahlenschutzplatten bzw. Strahlenschutzringe umfassen. Der Kolben-Strahlenschutz ist benachbart von der Strahlenquelle 110 angeordnet. Er kann die Strahlenquelle 110 wie einen Ring umgeben. Der Kolben-Strahlenschutz 120b kann zumindest einen Teil der emittierten Strahlung abschirmen. Im ersten Zustand sind der Gehäuse-Strahlenschutz 120a und der Kolben-Strahlenschutz 120b bevorzugt in der Lage, die Strahlenquelle 110 im Wesentlichen vollständig abzuschirmen. Der Kolben 132 ist pneumatisch mit dem Innenraum des Druckbehälters 200 oder mit einer Druckleitung direkt oder indirekt verbunden. Auf den Kolben 132 eine pneumatische Druckkraft F_{G} ein, die indikativ für den Druck in dem Druckbehälter 200 ist. Der Kolben wird durch die Kapsel 140 im ersten Zustand gehalten. Die Kapsel140 bringt also eine Gegenkraft zur Druckkraft F_{G} auf. Die Druckentlastungsöffnung 150 ist im ersten Zustand bzw. in einer ersten bzw. Ausgangslage des Kolbens 132 verdeckt/verschlossen, so dass kein Fluid aus dem Druckbehälter 200 entweichen kann.

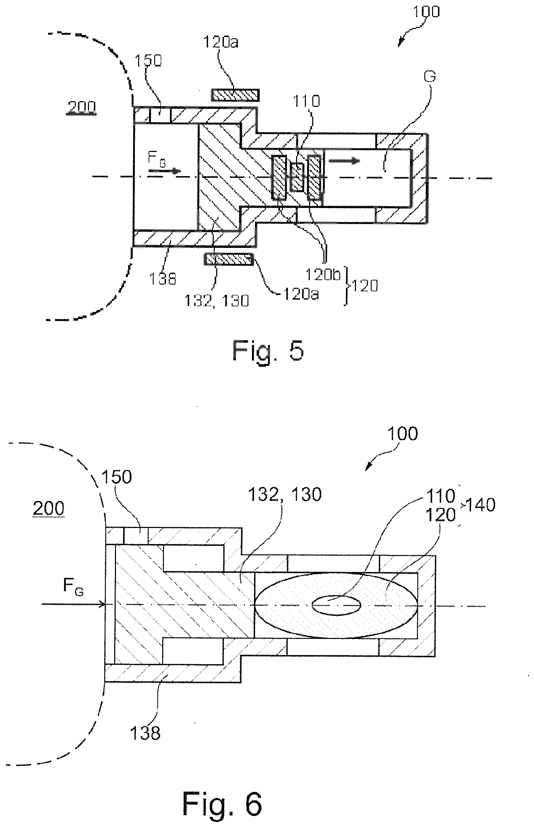

Fig. 5 zeigt die Anzeige im zweiten Zustand. Die Kapsel 140 ist aufgrund eines thermischen Ereignisses in der Nähe des Behälters 200 geplatzt und bringt folglich nicht mehr die Gegenkraft zur Druckkraft F_{G} auf. Daher bewegt sich der Kolben 132 aus seiner ersten bzw. Anfangslage (vgl. Fig. 4), in der die Strahlenquelle 110 durch den Strahlenschutz 120 abgeschirmt und die Druckentlastungsöffnung 150 verdeckt war, in eine zweite bzw. Endlage (zweiter Zustand). In dieser zweiten Lage des Kolbens 132 wird zumindest ein Teil der emittierten Strahlung nicht mehr abgeschirmt. Folglich kann das Strahlungssignal von Rettungskräften (auch aus sicherer Entfernung zum Behälter) erfasst werden. Gleichzeitig wird durch die Kolbenverschiebung die Druckentlastungsöffnung 150 frei gelegt, so dass eine Druckentlastung im Behälter stattfinden kann, insbesondere wenn ein thermisches Ereignis vorliegt. Vorteilhaft ist die in den Figuren 4 und 5 gezeigte Anzeige also auch als ein Druckentlastungsventil ausgebildet.

Wird die Anzeige 100 in das Druckentlastungsventil integriert, sind beide Systeme unmittelbar mechanisch miteinander gekoppelt bzw. sind eins. Somit ist die Wahrscheinlichkeit des unabhängigen Versagens der Systeme (Anzeige löst aus, Druckentlastungsventil hingegen nicht) verringert. Ferner ist eine solche Lösung auch kostengünstiger herzustellen und benötigt weniger Bauraum. Es werden weniger Bauteile insgesamt benötigt und es fallen insgesamt weniger Dichtstellen an, wenn die Anzeige in das Druckentlastungsventil integriert ist. Dies verringert zusätzlich die Gefahr von Leckagen.
In der Ausführung gemäß den Figuren 4 und 5 ist der Strahlenschutz 120 im Gehäuse 138 angeordnet und die Strahlenquelle 110 im Kolben. Ebenso ist es möglich, dass die Strahlenquelle 110 im Gehäuse 138 angeordnet ist und der Kolben 132 den Strahlenschutz 120 relativ zur Strahlenquelle 110 verschiebt, wenn der Kolben 132 verschoben wird.
Fig. 6 zeigt eine weitere Form der Integration einer Anzeige 100 in ein Druckentlastungsventil 100 gemäß der Erfindung. Die Strahlenquelle 110 ist in die Kapsel 140 des Druckentlastungsventils integriert. Das Lot der Kapsel 140, beispielsweise Blei, umschließt die Strahlenquelle 110 und bildet somit den Strahlenschutz 120 aus. Die Druckentlastungsöffnung 150 ist im ersten Zustand bzw. in einer ersten bzw. Ausgangslage des Kolbens 132 verdeckt, so dass kein Fluid aus dem Druckbehälter entweichen kann.
Schmilzt aufgrund eines thermischen Ereignisses die Kapsel 140, genauer gesagt das Lot bzw. der Strahlenschutz 120, so wird die Strahlenquelle 110 frei gelegt und die Strahlen der Strahlenquelle 110 können detektiert werden (zweiter Zustand). Gleichzeitig wird durch die Kolbenverschiebung die Druckentlastungsöffnung 150 frei gelegt, so dass eine Druckentlastung im Behälter 200 stattfinden kann, insbesondere wenn ein thermisches Ereignis vorliegt.
Der Strahlenschutz 120 ist in diesem Ausführungsbeispiel also der Aktuator, der die Anzeige 100 von dem ersten Zustand, in dem der Strahlenschutz 120 die emittierte Strahlung abschirmt, in den zweiten Zustand überführt, in dem zumindest ein Teil der emittierten Strahlung nicht abgeschirmt wird. Der Strahlenschutz 120 kann dann also insbesondere aus einem Material hergestellt und in der Anzeige derart angeordnet sein, dass bei einem thermischen Ereignis der Strahlenschutz 120 schmilzt. Beispielsweise kann der Strahlenschutz aus Blei oder einer Bleilegierung bestehen oder diese(s) aufweisen.
Dieser Schmelzaktuator kann aber auch ebenso Einsatz finden bei den Anzeigen der Figuren 4 und 5. Insbesondere kann neben dem mechanischen Aktuator der Figuren 4 und 5 auch ein zusätzlicher Schmelzaktuator verwendet werden. Ferner kann auch ganz allgemein eine Kapsel bzw. ein Schmelzaktuator 140 an bzw. benachbart zum Druckbehälter vorgesehen sein, die/der auf ein thermisches Ereignis hin auslöst. Der Schmelzaktuator kann dabei jegliche geeignete Form haben, solange er bei einem thermischen Ereignis die Kapsel von den ersten Zustand in den zweiten Zustand überführt. Der Aktuator ist im Sinne der hier offenbarten Technologie ein Zustandswandler.
In den Figuren 1 bis 6 ist die Anzeige in Verbindung mit einem Druckbehälter 200 gezeigt.

Die hier offenbarte Anzeige zeichnet sich durch einen einfachen Mechanismus aus, welcher ein Feder/Kolbensystem umfasst. Das System arbeitet in jeder Unfallsituationen (d.h. auch bei einem Fahrzeugbrand, starker Verformung der Karosserie, etc.) zuverlässig.
Die vorhergehende Beschreibung der vorliegenden Erfindung dient nur zu illustrativen Zwecken und nicht zum Zwecke der Beschränkung der Erfindung. Im Rahmen der hier offenbarten Technologie sind verschiedene Änderungen und Modifikationen möglich, ohne den Umfang der Erfindung sowie ihrer Äquivalente zu verlassen. Beispielsweise kann anstatt einer translatorischen Hubkolbenbewegung eine rotatorische Bewegung durch Federkraft und pneumatische Druckkraft initialisiert werden. Ferner kann sich beispielsweise der Strahlenschutz 120 bzw. Teile des Strahlenschutzes 120 relativ zur Strahlenquelle 110 bewegen. Insbesondere kann die Anzeige zur Anzeige eines Druckzustandes verschiedener Druckbehälter und Leitungen bzw. Leitungsteilbereiche herangezogen werden.

## Patentansprüche

1. Druckzustands- und/oder Schaltzustandsanzeige (100), umfassend:
- eine Strahlenquelle (110), die geeignet, ist Strahlung zu emittieren,
- einen Strahlenschutz (120), der ausgebildet ist, die Strahlenquelle (110) abzuschirmen, und
- einen Aktuator (130), der geeignet ist, die Anzeige (100) von einem ersten Zustand in einen zweiten Zustand zu überführen,
wobei in dem ersten Zustand der Strahlenschutz (120) die emittierte Strahlung abschirmt, wobei in dem zweiten Zustand zumindest ein Teil der emittierten Strahlung nicht abgeschirmt wird, **dadurch gekennzeichnet, dass** die Anzeige als Druckentlastungsventil für einen Druckbehälter ausgebildet ist.

2. Anzeige nach Anspruch 1, wobei das Druckentlastungsventil ein thermisches Druckentlastungsventil ist.

3. Anzeige nach einem der vorherigen Ansprüche, wobei der Aktuator (130) einen Kolben (132) umfasst, und wobei im bzw. am Kolben (132) die Strahlenquelle (110) angeordnet ist.

4. Anzeige nach Anspruch 3, wobei auf den Kolben (132) eine pneumatische Druckkraft (F_{G}) einwirkt, die indikativ für den Druck in dem Druckbehälter (200) ist, und wobei der Kolben durch eine Kapsel (140) im ersten Zustand gehalten ist.

5. Anzeige nach einem der vorherigen Ansprüche, wobei der Aktuator (130) eine Relativbewegung ermöglicht
- zwischen der Strahlenquelle (110) und dem Strahlenschutz (120), und/oder
- zwischen Teilen des Strahlenschutzes (120),
wobei die Anzeige (100) durch die Relativbewegung von dem ersten Zustand in den zweiten Zustand überführt wird.

6. Anzeige nach einem der vorherigen Ansprüche, wobei im ersten Zustand die Strahlenquelle (110) vom Strahlenschutz (120) umschlossen ist, und wobei im zweiten Zustand zumindest ein Teil der Strahlenquelle (110) freiliegt.

7. Anzeige nach Anspruch 3, wobei im Kolben (132) ferner mindestens ein Kolben-Strahlenschutz (120b) angeordnet ist, und/oder wobei mindestens ein Gehäuse-Strahlenschutz (120a) im bzw. benachbart zum Gehäuse (138) der Anzeige vorgesehen sind.

8. Anzeige nach einem der vorherigen Ansprüche, wobei die Strahlenquelle ein radioaktiver Strahler ist.

9. Anzeige nach einem der vorherigen Ansprüche, wobei der Strahlenschutz (120) der Aktuator (130) und/oder ein zusätzlicher Aktuator (130) ist, und wobei der Strahlenschutz (120) aus einem Material hergestellt und in der Anzeige derart angeordnet ist, dass bei einem thermischen Ereignis der Strahlenschutz (120) schmilzt.

10. Anzeige nach Anspruch 9, wobei der schmelzbare Strahlenschutz (120) sowie die Strahlenquelle (110) Bestandteil einer Kapsel (140) sind.

## Claims

1. A pressure and/or switching state display (100) comprising:
- a radiation source (110) which can emit radiation,
- radiation protection (120), which is designed to shield the radiation source (110), and
- an actuator (130), which can transfer the display (100) from a first state into a second state,
wherein in the first state the radiation protection (120) shields the emitted radiation, wherein in the second state at least some of the emitted radiation is not shielded, **characterised in that** the display is formed as a pressure relief valve for a pressure vessel.

2. A display according to claim 1, wherein the pressure relief valve is a thermal pressure relief valve.

3. A display according to any one of the preceding claims, wherein the actuator (130) comprises a piston (132), and wherein the radiation source (110) is arranged in or on the piston (132).

4. A display according to claim 3, wherein a pneumatic compressive force (F_{G}) acts on the piston (132) and is indicative of the pressure in the pressure vessel (200), and wherein the piston is held in the first state by a capsule (140).

5. A display according to any one of the preceding claims, wherein the actuator (130) enables a relative movement
- between the radiation source (110) and the radiation protection (120) and/or
- between parts of the radiation protection (120),
wherein the display (100) is transferred from the first state into the second state by the relative movement.

6. A display according to any one of the preceding claims, wherein in the first state the radiation source (110) is enclosed by the radiation protection (120), and wherein in the second state at least some of the radiation source (110) is exposed.

7. A display according to claim 3, wherein at least one piston radiation protection (120b) is also arranged in the piston and/or
wherein at least one housing radiation protection (102a) is/are provided in or adjacently to the housing (138) of the display.

8. A display according to any one of the preceding claims, wherein the radiation source is an emitter of radioactive radiation.

9. A display according to any one of the preceding claims, wherein the radiation protection (120) is the actuator (130) and/or an additional actuator (130), and wherein the radiation protection (120) is produced from a material and is arranged in the display in such a way that the radiation protection (120) melts in the case of a thermal event.

10. A display according to claim 9, wherein the meltable radiation protection (120) and the radiation source (110) are part of a capsule (140).

## Revendications

1. Indicateur d'état de pression et/ou d'état de commutation (100) comprenant :
- une source de rayonnement (110) susceptible d'émettre un rayonnement,
- une protection contre les rayonnements (120) susceptible de faire écran à la source de rayonnement (110), et
- un actionneur (130) susceptible de transférer l'indicateur (100) d'un premier état à un second état,
dans le premier état, la protection contre les rayonnements (120) faisant écran au rayonnement émis, et dans le second état, au moins une partie du rayonnement émis n'étant pas soumis à un écran,
**caractérisé en ce que**
l'indicateur est réalisé sous la forme d'une soupape de décharge de pression d'un réservoir sous pression.

2. Indicateur conforme à la revendication 1,
dans lequel la soupape de décharge de pression est une soupape de décharge de pression thermique.

3. Indicateur conforme à l'une des revendications précédentes,
dans lequel l'actionneur (130) comporte un piston (132), et la source de rayonnement (110) est montée dans ou sur le piston (132).

4. Indicateur conforme à la revendication 3,
dans lequel sur le piston (132) agit une force de pression pneumatique (F_{G}) qui indique la pression dans le réservoir sous pression (200), et le piston est maintenu dans le premier état par une capsule (140).

5. Indicateur conforme à l'une des revendications précédentes,
dans lequel l'actionneur (130) permet un déplacement relatif :
- entre la source de rayonnement (110) et la protection contre les rayonnements (120), et/ou
- entre des parties de la protection contre les rayonnements (120), l'indicateur (100) étant transféré du premier état dans le second état par le déplacement relatif.

6. Indicateur conforme à l'une des revendications précédentes,
dans lequel dans le premier état la source de rayonnement (110) est entourée par la protection contre les rayonnements (120) et dans le second état au moins une partie de la source de rayonnement (110) est libre.

7. Indicateur conforme à la revendication 3,
dans lequel dans le piston (132) est en outre montée au moins une protection contre les rayonnements de piston (120b) et/ou au moins une protection contre les rayonnements de boîtier (120a) est prévue dans ou à proximité du boîtier (138) de l'indicateur.

8. Indicateur conforme à l'une des revendications précédentes,
dans lequel la source de rayonnement est un émetteur de rayonnement radioactif.

9. Indicateur conforme à l'une des revendications précédentes,
dans lequel la protection contre les rayonnements (120) est l'actionneur (130) et/ou un actionneur supplémentaire (130), et la protection contre les rayonnements (120) est réalisée en un matériau et est montée dans l'indicateur de sorte que, en présence d'un événement thermique, celle de protection contre les rayonnements (120) fonde.

10. Indicateur conforme à la revendication 9, dans lequel la protection contre les rayonnements fusible (120) ainsi que la source de rayonnement (110) sont des composants d'une capsule (140).
